# EUROPÄISCHE PATENTANMELDUNG

(11) **EP 1 122 470 A2**
(43) Veröffentlichungstag der Anmeldung: **08.08.2001**
(21) Anmeldenummer: 01110815.6
(22) Anmeldetag: 18.12.1996
(51) Int. Cl.: F16J 15/08

(54) **Zylinderkopfdichtung**

(30) Priorität: 23.12.1995 DE 19548573
(62) Teilanmeldung aus: 96120316.3
(71) Anmelder: ElringKlinger AG, 72581 Dettingen (DE)
(72) Erfinder: Dickhaut-Koop, Reinhard, Dr., 65510 Idstein (DE); Werz, Ulrich, 72581 Dettingen (DE); Griesinger, Eberhard, 72574 Bad Urach (DE)
(74) Vertreter: Sparing - Röhl - Henseler Patentanwälte

(57) **Zusammenfassung**

Die Erfindung betrifft eine metallische Zylinderkopfdichtung für eine Brennkraftmaschine mit zwei Deckblechen (1), die mit einer oder mehreren nebeneinander angeordneten Öffnungen (3) entsprechend den Brennkammern der Brennkraftmaschine versehen sind, wobei beide Deckbleche (1) um jede Öffnung (3) herum mit Abstand zu dieser unter Belassung eines geraden Blechabschnitts (5) im öffnungsrandbereich eine zum gegenüberliegenden Deckblech (1) weisende Sicke (4) aufweisen und zwischen den Deckblechen (1) ein gegebenenfalls aus mehreren Lagen bestehendes Zwischenelement (2) angeordnet ist, das einen um jede Öffnung (3) herum radial innenseitig von der jeweiligen Sicke (4) verlaufenden Federwegbegrenzer für die Sicken (4) aufweist, wobei das Zwischenelement (2) zumindest im Bereich des jeweiligen Federwegbegrenzers wenigstens eine plastisch verformbare Dichtungslage (10; 11; 13) aufweist.

## Beschreibung

Die Erfindung betrifft eine Zylinderkopfdichtung nach dem Oberbegriff des Anspruchs 1.

Aus der EP 0 306 766 C1 bzw. der EP 0 230 804 C1 ist eine derartige mehrlagige metallische Zylinderkopfdichtung für eine Brennkraftmaschine bekannt, bei der zwei gesickte Deckbleche zusammen mit einem Bördelblech und gegebenenfalls einem Trägerblech vorgesehen sind, wobei das Bördelblech durch seine Umbördelung längs der Brennkammeröffung einen Federwegbegrenzer für die Sicken bildet.

Derartige bekannte, mehrlagige Zylinderkopfdichtungen zeigen nach ihrem Einbau insbesondere in mehrventiligen Motoren, die über Zylinderköpfe mit vergleichsweise geringer Steifigkeit verfügen, entlang des jeweiligen Brennkammerumfangs folgendes Bild:
- Im Bereich der Zylinderkopfschrauben wird die Dichtung infolge der Schraubenvorspannung durch hohe Druckkräfte zusammengepreßt, die Sicken benachbart zur Brennkammer werden höchstzulässig bis auf Höhe des Federwegbegrenzers eingefedert.
- Im Bereich zwischen den Zylinderkopfschrauben ist die Pressung infolge der Nachgiebigkeit der die Dichtung verspannenden Bauteile geringer, der Abfall der Pressung ist umso größer, je niedriger z.B. die Biegesteifigkeit des Zylinderkopfs im betrachteten Abschnitt ist.

Die über den Brennkammerumfang unterschiedliche Pressung kann dazu führen, daß die Sicken benachbart zur Brennkammer auch im ungefeuerten Zustand der Brennkraftmaschine teilweise vollständig oder nahezu vollständig ausfedern, so daß dann beim Motorbetrieb eine einwandfreie, dauerhafte Abdichtung deshalb nicht mehr gewährleistet ist, weil der aktuelle Arbeitsbereich der Sicken nicht dem ursprünglich festgelegten entspricht bzw. die erforderliche Dichtkraft und/oder Dauerhaltbarkeit wegen zu starker Ausfederung der Sicken nicht mehr gegeben sind.

Um die Pressungsverteilung über den Brennkammerumfang zu verteilen, ist es aus der DE 42 19 709 A1 bekannt, bei einer ein Zwischenelement mit einem Trägerblech und zwei gesickte Deckbleche umfassenden metallischen Zylinderkopfdichtung das Zwischenelement im Bereich um die Brennkammeröffnung radial innenseitig von den Sicken der Deckbleche entsprechend zu profilieren. Dies hat jedoch den Nachteil, daß sich die Profilierung an theoretischen Überlegungen und Berechnungen orientiert, während Toleranzen, die in der Praxis zwangsläufig auftreten, nicht berücksichtigt werden können.

Aufgabe der Erfindung ist es, eine Zylinderkopfdichtung nach dem Oberbegriff des Anspruchs 1 zu schaffen, bei der die Pressungsverteilung über den Brennkammerumfang entsprechend den tatsächlichen Verhältnissen vergleichmäßigt wird.

Diese Aufgabe wird entsprechend dem kennzeichnenden Teil des Anspruchs 1 gelöst.

Die angestrebte Vergleichmäßigung der Pressungsverteilung bedeutet im Bereich der Zylinderkopfschrauben eine Begrenzung der Pressung auf einen auszulegenden Höchstwert und im Bereich zwischen den Zylinderkopfschrauben einen vergleichsweise geringeren Pressungabfall. Beides wird durch Vorsehen einer plastisch verformbaren Dichtungslage erreicht, so daß bei Montage der Zylinderkopfdichtung eine partielle Plastifizierung dieser Dichtungslage im Zylinderkopfschraubenbereich bei Erreichen des auslegungsgemäßen Pressungshöchstwertes eintritt. Auf diese Weise stellt sich die Zylinderkopfdichtung quasi von selbst auf die Steifigkeits- und Kräfteverhältnisse ein und bewirkt in Bereichen hoher Bauteilsteifigkeiten durch Begrenzung der Pressung zudem eine Verringerung der Gefahr von Eingrabungen im Zylinderkopf. In Bereichen niedrigerer Bauteilsteifigkeiten ergibt sich eine vergleichsweise größere Verformung der die Zylinderkopfdichtung verspannenden Bauteile mit der Folge einer erhöhten Pressung.

Auch im Hinblick auf den zu beobachtenden Schwingungsreibverschleiß ist die Vergleichmäßigung der Pressungsverteilung günstig. Bei vergleichbarem Reibbeiwert verringert die höhere Pressung die horizontale Dynamik der Zylinderkopfdichtung.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

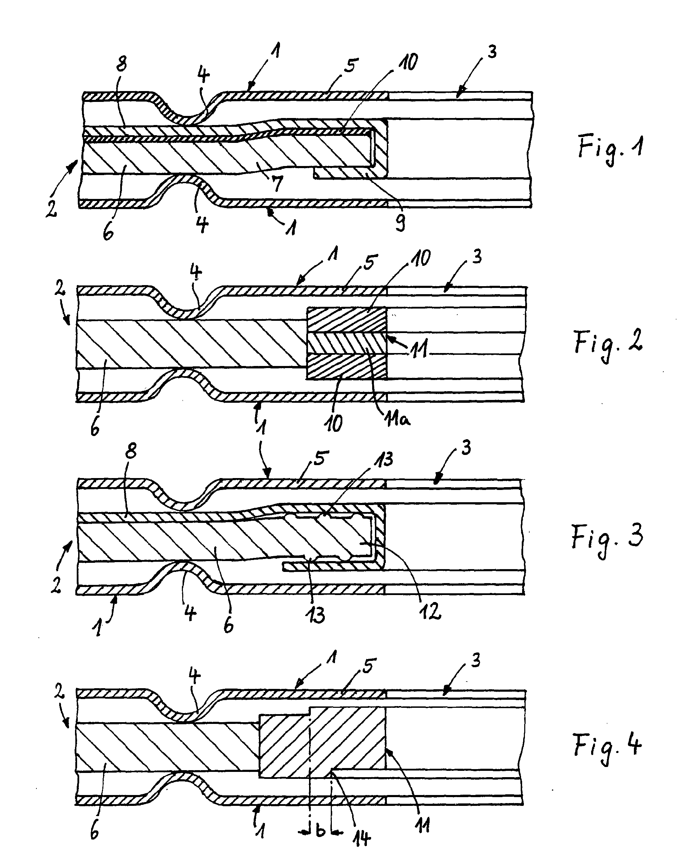

Fig. 1 bis 4 zeigen schematisch und ausschnittweise Schnitte von verschiedenen Ausführungsformen von Zylinderkopfdichtungen.

Die in Fig. 1 dargestellte Zylinderkopfdichtung umfaßt zwei Deckbleche 1 mit einem hierzwischen angeordneten Zwischenelement 2. Die Deckbleche 1 und das Zwischenelement 2 weisen eine Reihe von Öffnungen 3 entsprechend den Brennkammern der zugehörigen Brennkraftmaschine sowie nicht dargestellte Schraubendurchtrittslöcher für Zylinderkopfschrauben und üblicherweise ebenfalls nicht dargestellte Durchtrittsöffnungen für Kühlwasser bzw. Öl auf.

Die gewöhnlich aus Federstahl hergestellten und ansonsten planen Deckbleche 1 sind mit Sicken 4 versehen, die mit Abstand unter Belassung eines geraden Blechabschnitts 5 im Randbereich der öffnung 3 angeordnet und zum Zwischenelement 2 gerichtet sind. Die Deckbleche 1 sind spiegelsymmetrisch zueinander angeordnet.

Das Zwischenelement 2 umfaßt ein planes Trägerblech 6, das im Bereich des Blechabschnitts 5 eine Abkröpfung 7 aufweisen kann. Das Zwischenelement 2 umfaßt ferner ein Bördelblech 8, das im Randbereich der öffnung 3 umgebördelt ist und daher einen umgebördelten, ringförmigen Rand 9 aufweist, der sich im Bereich des Blechabschnitts 5 erstreckt. Das Bördelblech 8 kann auf sich selbst oder um das Trägerblech 6 herum umgebördelt sein. Der umgebördelte Rand 9 bildet eine Verdickung am Brennkammerrand und damit einen Federwegbegrenzer für die Sicken 4.

Das Zwischenelement 2 umfaßt ferner eine sich über die Fläche des Trägerblechs 6 erstreckende, plastisch verformbare Dichtungslage 10, die zweckmäßigerweise zwischen Trägerblech 6 und Bördelblech 8 angeordnet ist, wobei der umgebördelte Rand 9 des Bördelblechs 8 vorzugsweise um die Dichtungslage 10 und gegebenenfalls zusätzlich um das Trägerblech 6 herum gebördelt ist.

Die Dichtungslage 10 kann aus beispielsweise einem im Verhältnis zu den Deck- und Trägerblechen 1, 6 weichen Metall wie Aluminium oder aus einem Elastomer bestehen.

Bei der in Fig. 2 dargestellten Ausführungsform umfaßt das Zwischenelement 2 ein Trägerblech 6 sowie um jede Öffnung 3 herum verlaufend einen Federwegbegrenzerring 11 von größerer Stärke als das Trägerblech 6. Der Federwegbegrenzerring 11 kann einstückig mit dem Trägerblech 6 verbunden oder ausgebildet sein, er kann aber auch lose eingelegt sein.

Der Federwegbegrenzerring 11 ist an den beiden den Deckblechen 1 zugekehrten Seiten eines Ringkerns 11a mit einer plastisch verformbaren Dichtungslage 10 versehen. Der Ringkern 11a kann aber auch entfallen, und zwar insbesondere dann, wenn der Federwegbegrenzerring 11 aus einem relativ weichen Metall wie etwa Aluminium besteht. Der Federwegbegrenzerring 11 kann aber auch beispielsweise aus zwei Ringen gebildet sein, zwischen denen sich nur eine etwa mittig zwischen zwei Ringen angeordnete plastisch verformbare Dichtungslage 10 befindet. Insbesondere kann es zweckmäßig sein, wenn ein Bördelblech 8 entsprechend Fig. 1 um den Federwegbegrenzerring 11 herum umgebördelt ist.

Bei der in Fig. 3 dargestellten Ausführungsform umfaßt das Zwischenelement 2 ein planes Trägerblech 6, das benachbart zum Brennkammerrand in einem benachbart zu den geraden Blechabschnitten 5 der Deckbleche 1 befindlichen, gegebenenfalls abgekröpften Ringabschnitt 12 beidseitig eine plastisch verformbare Oberflächengestaltung 13, die im dargestellten Ausführungsbeispiel als Rillierung ausgebildet ist, aufweist. Die Rillierung 13 bildet dabei zwei plastisch verformbare Dichtungslagen, die unter entsprechend hoher Pressung eingeebnet werden, zumal das Trägerblech 6 aus einem weicheren Material als die Deckschichten 1 besteht.

Zusätzlich umfaßt das Zwischenelement 2 der in Fig. 3 dargestellten Ausführungsform ein Bördelblech 8 mit einem auf sich oder um den Ringabschnitt 12 des Trägerblechs 6 umgebördelten Rand 9, um den Federwegbegrenzer für die Sicken 4 der Deckbleche 1 zu bilden.

Die plastisch verformbare Oberflächengestaltung 13 von Fig. 3 etwa in Form einer Rillierung od.dgl. kann auch bei einem Federwegbegrenzerring 11 gemäß Fig. 2 anstelle einer Dichtungslage 10 aus einem plastisch verformbaren Material anders als das des Federwegbegrenzerrings 11 verwendet werden.

Bei der in Fig. 4 dargestellten Ausführungsform ist ein Federwegbegrenzerring 11 mit einer größeren Stärke als derjenigen des Trägerblechs 6 eingelegt, der aus einem weicheren Metall als das Trägerblech 6 und die Deckbleche 1, wie beispielsweise Aluminium, besteht und einen Absatz 14 aufweist, dessen Breite b die Stärke der Pressung bestimmt, von der an ein Fließen seines Materials eintritt. Durch Variation der Breite b kann daher die plastische Verformbarkeit zusätzlich eingestellt werden.

Der Federwegbegrenzer wird zweckmäßigerweise jeweils im wesentlichen mittig zwischen den Deckblechen 1 angeordnet.

Die Oberflächen der Deckbleche 1 und gegebenenfalls der übrigen Bleche werden gewöhnlich mit einer dünnen Elastomerbeschichtung in einer Stärke etwa entsprechend der Rauheit der zu verspannenden Bauteile versehen, um eine Mikroabdichtung zu gewährleisten.

## Patentansprüche

1. Metallische Zylinderkopfdichtung für eine Brennkraftmaschine mit zwei Deckblechen (1), die mit einer oder mehreren nebeneinander angeordneten Öffnungen (3) entsprechend den Brennkammern der Brennkraftmaschine versehen sind, wobei beide Deckbleche (1) um jede Öffnung (3) herum mit Abstand zu dieser unter Belassung eines geraden Blechabschnitts (5) im Öffnungsrandbereich eine zum gegenüberliegenden Deckblech (1) weisende Sicke (4) aufweisen und zwischen den Deckblechen (1) ein ein Trägerblech (6) umfassendes Zwischenelement (2) angeordnet ist, das einen um jede Öffnung (3) herum radial innenseitig von der jeweiligen Sicke (4) verlaufenden Federwegbegrenzer (9) für die Sicken (4) besitzt, wobei das Zwischenelement (2) zumindest im Bereich des jeweiligen Federwegbegrenzers (9) wenigstens eine plastisch verformbare Dichtungslage (10; 11; 13) aufweist, dadurch **gekennzeichnet,** daß die Dichtungslage aus einem um die jeweilige Öffnung (3) herum verlaufenden, plastisch verformbaren Federwegbegrenzerring (11) von größerer Stärke als der des Trägerblechs (6) gebildet ist.

2. Zylinderkopfdichtung nach Anspruch 1, dadurch gekennzeichnet, daß der Federwegbegrenzerring (11) wenigstens eine plastisch verformbare Dichtungslage (10, 13) umfaßt.

3. Zylinderkopfdichtung nach Anspruch 1 oder 2, dadurch gekennzeichnet, daß die plastisch verformbare, gegebenenfalls als Federwegbegrenzerring (11) ausgebildete Dichtungslage (10; 11) aus einem im Verhältnis zu den Deck- und Trägerblechen (1, 6) weichen Metall besteht.

4. Zylinderkopfdichtung nach Anspruch 3, dadurch gekennzeichnet, daß das weiche Metall Aluminium ist.

5. Zylinderkopfdichtung nach Anspruch 3 oder 4, dadurch gekennzeichnet, daß der Federwegbegrenzerring (11) einen Absatz (14) vorbestimmter Breite (b) aufweist.

6. Zylinderkopfdichtung nach Anspruch 5, dadurch gekennzeichnet, daß die plastisch verformbare, gegebenenfalls als Federwegbegrenzerring (11) ausgebildete Dichtungslage (10; 11) aus einem Elastomer besteht.

7. Zylinderkopfdichtung nach Anspruch 1 oder 2, dadurch gekennzeichnet, daß die plastisch verformbare Dichtungslage durch eine plastisch verformbare Oberflächengestaltung (13) des Trägerblechs (6) bzw. des Federwegbegrenzerrings (11) gebildet ist.

8. Zylinderkopfdichtung nach Anspruch 7, dadurch gekennzeichnet, daß die plastisch verformbare Oberflächengestaltung eine Rillierung (13) ist.

9. Metallische Zylinderkopfdichtung für eine Brennkraftmaschine mit zwei Deckblechen (1), die mit einer oder mehreren nebeneinander angeordneten Öffnungen (3) entsprechend den Brennkammern der Brennkraftmaschine versehen sind, wobei beide Deckbleche (1) um jede Öffnung (3) herum mit Abstand zu dieser unter Belassung eines geraden Blechabschnitts (5) im Öffnungsrandbereich eine zum gegenüberliegenden Deckblech (1) weisende Sicke (4) aufweisen und zwischen den Deckblechen (1) ein ein Trägerblech (6) umfassendes Zwischenelement (2) angeordnet ist, das einen um jede Öffnung (3) herum radial innenseitig von der jeweiligen Sicke (4) verlaufenden Federwegbegrenzer (9) für die Sicken (4) besitzt, wobei das Zwischenelement (2) zumindest im Bereich des jeweiligen Federwegbegrenzers (9) wenigstens eine plastisch verformbare Dichtungslage (10; 11; 13) aufweist, dadurch **gekennzeichnet,** daß die plastisch verformbare, als Federwegbegrenzerring (11) ausgebildete Dichtungslage (10; 11) aus einem im Verhältnis zu den Deck- und Trägerblechen (1, 6) weichen Metall besteht.

10. Zylinderkopfdichtung nach Anspruch 9, dadurch gekennzeichnet, daß das weiche Metall Aluminium ist.

11. Zylinderkopfdichtung nach Anspruch 9 oder 10, dadurch gekennzeichnet, daß der Federwegbegrenzerring (11) einen Absatz (14) vorbestimmter Breite (b) aufweist.

12. Metallische Zylinderkopfdichtung für eine Brennkraftmaschine mit zwei Deckblechen (1), die mit einer oder mehreren nebeneinander angeordneten Öffnungen (3) entsprechend den Brennkammern der Brennkraftmaschine versehen sind, wobei beide Deckbleche (1) um jede Öffnung (3) herum mit Abstand zu dieser unter Belassung eines geraden Blechabschnitts (5) im Öffnungsrandbereich eine zum gegenüberliegenden Deckblech (1) weisende Sicke (4) aufweisen und zwischen den Deckblechen (1) ein ein Trägerblech (6) umfassendes Zwischenelement (2) angeordnet ist, das einen um jede Öffnung (3) herum radial innenseitig von der jeweiligen Sicke (4) verlaufenden Federwegbegrenzer (9) für die Sicken (4) besitzt, wobei das Zwischenelement (2) zumindest im Bereich des jeweiligen Federwegbegrenzers (9) wenigstens eine plastisch verformbare Dichtungslage (10; 11; 13) aufweist, dadurch **gekennzeichnet,** daß die plastisch verformbare, als Federwegbegrenzerring (11) ausgebildete Dichtungslage (10; 11) aus einem Elastomer besteht.

13. Zylinderkopfdichtung nach einem der Ansprüche 1 bis 12, dadurch gekennzeichnet, daß ein Bördelblech (8) um die plastisch verformbare, gegebenenfalls als Federwegbegrenzerring ausgebildete Dichtungslage (10; 11) und gegebenenfalls zusätzlich um das Trägerblech (6) gebördelt ist.

14. Zylinderkopfdichtung nach einem der Ansprüche 1 bis 13, dadurch gekennzeichnet, daß der Federwegbegrenzer im wesentlichen symmetrisch zwischen den Deckblechen (1) angeordnet ist.
